(19) Europäisches Patentamt European Patent Office Office européen des brevets

(11) **EP 3 864 931 B1**

(12) **FASCICULE DE BREVET EUROPEEN**

(45) Date de publication et mention
de la délivrance du brevet:
**30.11.2022 Bulletin 2022/48**

(21) Numéro de dépôt: **19782596.1**

(22) Date de dépôt: **03.10.2019**

(51) Classification Internationale des Brevets (IPC):
**H04W 84/18** *(2009.01)* **H04L 27/00** *(2006.01)*

(52) Classification Coopérative des Brevets (CPC):
**H04W 84/18; H04L 27/10**

(86) Numéro de dépôt international:
**PCT/EP2019/076844**

(87) Numéro de publication internationale:
**WO 2020/074365 (16.04.2020 Gazette 2020/16)**

(54) **PROCEDE ET DISPOSITIF DE TRANSMISSION D'UN PAQUET**

VERFAHREN UND VORRICHTUNG ZUM SENDEN EINES PAKETS

METHOD AND DEVICE FOR TRANSMITTING A PACKET

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.10.2018 FR 1859287**

(43) Date de publication de la demande:
**18.08.2021 Bulletin 2021/33**

(73) Titulaire: **SAFRAN ELECTRONICS & DEFENSE
75015 Paris (FR)**

(72) Inventeur: **CHIODINI, Alain
92100 BOULOGNE BILLANCOURT (FR)**

(74) Mandataire: **Cabinet Le Guen Maillet
3, impasse de la Vigie
CS 71840
35418 Saint-Malo Cedex (FR)**

(56) Documents cités:
**WO-A1-2010/028307 US-A1- 2010 316 043
US-A1- 2012 250 783**

**Description**

DOMAINE TECHNIQUE

La présente invention concerne un procédé et un dispositif de transmission d'un paquet comportant au moins une information identifiant un émetteur dans un réseau Ad-Hoc de véhicules (Ad-Hoc Network ou VANET ou MANET en anglais), pour fournir des communications au sein d'un groupe de véhicules à portée les uns des autres et entre les véhicules et les équipements fixes à portée, usuellement appelés équipements de la route.

Un VANET peut être utilisé pour soutenir le développement des Systèmes de Transport Intelligent STI (Intelligent Transportation Systems ITS en anglais).

De nombreuses applications sont proposées pour les VANET telles que l'alerte précoce et la prévention des accidents, les meilleurs itinéraires vers la destination, la réduction de la congestion, la prévention des embouteillages, l'accès Internet, les véhicules autonomes et les applications peer-to-peer. La conception et la mise en œuvre de protocoles, d'applications et de systèmes pour les VANET nécessitent de considérer ces caractéristiques distinctives, en particulier la grande mobilité des véhicules, le changement rapide de la topologie et le chemin prévu. En outre, il doit également tenir compte de plusieurs facteurs, tels que l'exigence de qualité, en particulier pour la transmission de messages d'alerte.

Pour la qualité de transmission, les collisions entre plusieurs messages posent un problème important. La collision entre deux messages génère des problèmes, pour le récepteur, d'identification des émetteurs ayant émis les messages.

Les messages d'alerte doivent être décodés rapidement et sûrement.

ETAT DE LA TECHNIQUE ANTERIEURE

Le format des paquets de données tels que proposés dans l'état de la technique ne permet pas une identification rapide et fiable d'un émetteur émettant un paquet de données pour lequel une collision avec plusieurs autres paquets de données apparaît.

La demande de brevet WO2010/028307 divulgue une forme d'onde et des dispositifs et procédés associés pour une utilisation dynamique d'une interface radio dans un réseau mobile ad hoc.

La demande de brevet US 2010/250783 divulgue un système de déchargement TCP/IP indépendant du produit délai bande passante.

EXPOSE DE L'INVENTION

Un objet de la présente invention est de proposer un procédé et un dispositif de transmission d'un paquet comportant au moins une information identifiant un émetteur dans un réseau Ad-Hoc de véhicules qui permette de décoder le paquet de données même si celui-ci entre en collision à la réception avec d'autres paquets de données émis par d'autres émetteurs.

A cet effet, il est proposé un procédé de transmission d'un paquet comportant au moins une information identifiant un émetteur dans un réseau Ad-Hoc, le paquet étant destiné à au moins un récepteur, caractérisé en ce que le procédé comporte les étapes, exécutées par l'émetteur à chaque transmission d'un paquet, de :

- insertion dans le paquet d'un premier signal pendant une première durée prédéterminée, le premier signal étant, en bande de base, de la forme :

$$S(t) = Ae^{i2\pi f_S t + i\varphi}$$

Où:

$t \in [0, T_S]$ qui est l'intervalle de temps sur lequel est défini le premier signal,
$A$ est l'amplitude,
$f_s$ est la fréquence du premier signal en bande de base et
$\varphi \in [0, 2\pi[$ est une phase choisie arbitrairement,

- insertion dans le paquet d'un second signal ayant les caractéristiques d'un signal modulé en fréquence dont la fréquence centrale est égale à la fréquence du premier signal, le second signal étant obtenu à partir d'une phase définie à partir d'un signal pseudopériodique, le second signal ayant préalablement été alloué à l'émetteur et ayant une seconde durée prédéterminée,

- insertion dans le paquet de données en association avec les premier et second signaux,
- transfert du paquet après une transposition en fréquence sur un médium radio.

L'invention concerne aussi un dispositif de transmission d'un paquet comportant au moins une information identifiant un émetteur dans un réseau Ad-Hoc, le paquet étant destiné à au moins un récepteur, caractérisé en ce que le dispositif est inclus dans l'émetteur et comporte :

- des moyens d'insertion dans le paquet d'un premier signal pendant une première durée prédéterminée, le premier signal étant, en bande de base, de la forme :

$$S(t) = Ae^{i2\pi f_S t + i\varphi}$$

Où:

  $t \in [0, T_S]$ qui est l'intervalle de temps sur lequel est défini le premier signal,
  $A$ est l'amplitude,
  $f_S$ est la fréquence du premier signal en bande de base et
  $\varphi \in [0, 2\pi[$ est une phase choisie arbitrairement,

- des moyens d'insertion dans le paquet d'un second signal ayant les caractéristiques d'un signal modulé en fréquence dont la fréquence centrale est égale à la fréquence du premier signal, le second signal étant obtenu à partir d'une phase définie à partir d'un signal pseudopériodique, le second signal ayant préalablement été alloué à l'émetteur et ayant une seconde durée prédéterminée,
- des moyens d'insertion dans le paquet de données en association avec les premier et second signaux,
- des moyens de transfert du paquet après une transposition en fréquence sur un médium radio.

Ainsi, il est possible d'identifier rapidement et de manière fiable un émetteur émettant un paquet de données pour lequel une collision avec plusieurs autres paquets de données apparaît.
L'invention concerne aussi un procédé d'identification d'au moins un émetteur ayant émis un paquet sur un médium radio, le paquet comportant au moins une information identifiant le ou chaque émetteur dans un réseau Ad-Hoc, le paquet étant destiné à au moins un récepteur, caractérisé en ce que le procédé comporte les étapes, exécutées par le récepteur de :

- détection d'au moins un premier signal complexe pendant une première durée prédéterminée, le premier signal étant, en bande de base, de la forme :

$$S(t) = Ae^{i2\pi f_S t + i\varphi}$$

Où:

  $t \in [0, T_S]$ qui est l'intervalle de temps sur lequel est défini le premier signal,
  $A$ est l'amplitude,
  $f_S$ est la fréquence du premier signal en bande de base et
  $\varphi \in [0, 2\pi[$ est une phase choisie arbitrairement,

- détection à la suite du premier signal d'au moins un second signal modulé en fréquence autour d'une fréquence égale à la fréquence de l'exponentielle complexe, le second signal ayant les caractéristiques d'un signal modulé en fréquence dont la fréquence centrale est égale à la fréquence du premier signal, le second signal étant obtenu à partir d'une phase définie à partir d'un signal pseudopériodique, le second signal ayant préalablement été alloué à l'émetteur et ayant une seconde durée prédéterminée,
- identification à partir du ou de chaque second signal détecté de l'émetteur ayant émis le paquet comportant au moins une information identifiant l'émetteur,
- extraction des données associées à chaque premier et second signal.

L'invention concerne aussi un dispositif d'identification d'au moins un émetteur ayant émis un paquet sur un médium radio, le paquet comportant au moins une information identifiant le ou chaque émetteur dans un réseau Ad-Hoc, le paquet étant destiné à au moins un récepteur, caractérisé en ce que le dispositif est inclus dans le récepteur et comporte :

- des moyens de détection d'au moins un premier signal complexe pendant une première durée prédéterminée, le premier signal étant, en bande de base, de la forme :

$$S(t) = Ae^{i2\pi f_S t + i\varphi}$$

Où : $t$ E $[0, T_S]$ est l'intervalle de temps sur lequel est défini le premier signal,
$A$ est l'amplitude,
$f_S$ est la fréquence du premier signal en bande de base et
$\varphi \in [0, 2\pi[$ est une phase choisie arbitrairement,

- des moyens de détection à la suite du premier signal d'au moins un second signal ayant les caractéristiques d'un signal modulé en fréquence dont la fréquence centrale est égale à la fréquence du premier signal, le second signal étant obtenu à partir d'une phase définie à partir d'un signal pseudopériodique, le second signal ayant préalablement été alloué à l'émetteur et ayant une seconde durée prédéterminée,
- des moyens d'identification à partir du ou de chaque second signal détecté de l'émetteur ayant émis le paquet comportant au moins une information identifiant l'émetteur,
- des moyens d'extraction des données associées à chaque premier et second signal.

Ainsi, il est possible d'identifier rapidement et de manière fiable un émetteur émettant un paquet de données pour lequel une collision avec plusieurs autres paquets de données apparaît.
Selon un mode particulier, la plage de fréquence dans laquelle les données sont insérées en association avec les premier et second signaux est centrée sur la fréquence du premier signal.
Ainsi, la largeur spectrale du paquet émis est minimale.
Selon un mode particulier, la plage de fréquence dans laquelle les données sont transmises est décalée du second signal de la moitié de la plage de fréquence dans laquelle le second signal est transféré.
Ainsi, il est possible de transmettre des paquets dans un laps de temps très court.
Selon un mode particulier, la plage de fréquence dans laquelle les données sont transmises est décalée du second signal au moins de la moitié de la plage de fréquence dans laquelle le second signal est transféré.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

Fig. 1 est un exemple de vue d'un tronçon de voie dans lequel des véhicules communiquent par l'intermédiaire d'un réseau Ad-Hoc ;
Fig. 2a est un premier exemple de paquet comportant au moins une information identifiant un émetteur selon la présente invention ;
Fig. 2b est un second exemple de paquet comportant au moins une information identifiant un émetteur selon la présente invention ;
Fig. 3 représente un exemple d'architecture d'un émetteur selon la présente invention ;
Fig. 4 représente un exemple d'architecture de l'interface réseau d'un émetteur selon la présente invention ;
Fig. 5 représente un exemple d'architecture d'un récepteur selon la présente invention ;
Fig. 6 représente un exemple d'architecture de l'interface réseau d'un récepteur selon la présente invention ;
Fig. 7a représente un premier mode de réalisation de la partie du paquet comportant une information identifiant un émetteur selon la présente invention ;
Fig. 7b représente un second mode de réalisation de la partie du paquet comportant une information identifiant un émetteur selon la présente invention ;
Fig. 7c représente un troisième mode de réalisation de la partie du paquet comportant une information identifiant un émetteur selon la présente invention ;
la Fig. 7d représente un quatrième mode de réalisation de la partie du paquet comportant une information identifiant un émetteur selon la présente invention ;

Fig. 8 représente un exemple d'algorithme exécuté par un émetteur selon la présente invention ;
Fig. 9 représente un exemple d'algorithme exécuté par un récepteur selon la présente invention.

EXPOSE DETAILLE DE MODES DE REALISATION

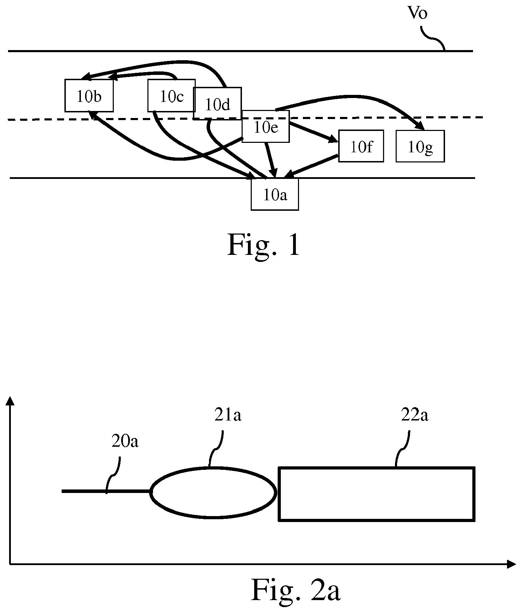

La Fig. 1 montre un exemple de vue d'un tronçon de voie Vo dans lequel une borne fixe 10a et des véhicules10b à 10g communiquent par l'intermédiaire d'un réseau Ad-Hoc.

Lorsque les véhicules 10c, 10d et 10e se percutent, ceux-ci émettent des paquets de données qui sont reçus par les véhicules et les bornes fixes situés à proximité.

Les flèches représentées en Fig. 1 représentent une partie des paquets de données transmises par l'intermédiaire du réseau Ad-Hoc.

Comme nous pouvons le remarquer dans la Fig. 1, le récepteur du véhicule 10b reçoit des paquets de données des véhicules 10c, 10d et 10e. Ces paquets de données sont susceptibles d'entrer en collision lorsqu'ils sont reçus par le récepteur du véhicule 10b.

De même, le récepteur de la borne fixe 10a reçoit des paquets de données des véhicules 10c, 10d, 10e et 10f. Ces paquets de données sont susceptibles d'entrer en collision lorsqu'ils sont reçus par le récepteur du véhicule 10b.

Il est à remarquer ici que la borne fixe 10a et chaque véhicule 10b à 10g comportent un émetteur et/ou un récepteur.

La Fig. 2a est un premier exemple de paquet comportant au moins une information identifiant un émetteur selon la présente invention.

L'axe des abscisses représente le temps, par exemple compris entre 0 et 100 ms et l'axe des ordonnées représente le plan fréquence, par exemple pour une plage de fréquence de 10 MHz.

Selon la présente invention, le paquet comportant au moins une information identifiant un émetteur est composé de trois parties 20a, 21a et 22a.

La partie 20a est un premier signal en bande de base de la forme :

$$S(t) = A e^{i2\pi f_S t + i\varphi}$$

Où:

$t \in [0, T_S]$ qui est l'intervalle de temps sur lequel est définie l'exponentielle complexe,
$A$ est l'amplitude,
$f_S$ est la fréquence du premier signal en bande de base qui est assimilable à une sinusoïde en Haute Fréquence et
$\varphi \in [0, 2\pi[$ est une phase choisie arbitrairement.

Une fréquence est allouée à chaque émetteur.

La partie 20a permet au récepteur de détecter le paquet et d'effectuer une synchronisation fréquentielle.

La partie 21a est un second signal, dit gazouillis, (en anglais chirp). Un gazouillis est un signal modulé en fréquence autour d'une fréquence centrale, en l'occurrence la fréquence de l'exponentielle complexe $f_s$.

Le gazouillis est par exemple décrit en bande de base par la formule suivante :

$$A_k^{(o)}(t) e^{i\psi_k^{(o)}(t) + i\varphi} \text{ avec } 1 \le k \le K$$

La partie 22a comporte les données du paquet.

La partie 21a permet au récepteur d'effectuer une synchronisation temporelle et d'identifier l'émetteur du paquet reçu. Chaque gazouillis alloué à un émetteur est différent des autres gazouillis alloués aux autres émetteurs et est orthogonal aux autres gazouillis alloués aux autres émetteurs. L'ensemble des gazouillis est défini en considérant un jeu de périodes différentes pour une loi sinusoïdale en utilisant le procédé d'orthogonalisation de Gram-Schmidt. L'ensemble des gazouillis avant orthogonalisation est défini à partir de la forme sinusoïdale de la forme :

$$G_N(t) = A e^{i\psi_N(t) + i\varphi}$$

Où:

$t \in [T_S, T_G]$ qui est l'intervalle de temps sur lequel est défini le gazouillis.

$\psi_N(t)$ est la phase du gazouillis qui est définie dans un premier exemple par la formule suivante :

$$\psi_N(t) = 2\pi f_S T_S + 2\pi \int_{T_S}^{t} \left[ f_S + \Delta f \sin\left(2\pi N \frac{t' - T_S}{T_G - T_S}\right) e^{-\left(\frac{t' - T_M}{\tau}\right)^2} \right] dt'$$

$\Delta f$ est l'excursion en fréquence par rapport à la fréquence de l'exponentielle complexe.

$N$ est le nombre de pseudo-périodes du motif mathématique décrivant l'allure de la fréquence instantanée lorsque la fonction

$$\sin\left(2\pi N \frac{t' - T_S}{T_G - T_S}\right)$$

est effectuée.

$$T_M = \frac{T_S + T_G}{2}$$

est le milieu de l'intervalle

$$[T_S, T_G]$$

$\tau$ est une constante associée à la fonction de pondération exponentielle quadratique du temps, $\tau$ sera par exemple pris égal à

$$\frac{T_G - T_S}{5}$$

afin que

$$W(T_S) = W(T_G) = 1{,}9 \cdot 10^{-3}$$

$\psi_N(t)$ est défini dans un second exemple par la formule suivante :

$$\psi_N(t) = 2\pi f_S T_S + 2\pi \int_{T_S}^{t} \left[ f_S + \Delta f \sin\left(2\pi N \frac{t' - T_S}{T_G - T_S}\right) \frac{1}{2}\left(1 + \cos\left(2\pi \frac{t - T_M}{T_G - T_S}\right)\right) \right] dt'.$$

Les seconde et troisième parties occupent une plage de fréquence par exemple de 625 kHz, plus précisément $\Delta f$ a une excursion en fréquence égale à la moitié de plage de fréquence, soit dans l'exemple précédent 312,5 kHz.
Le procédé d'orthogonalisation de Gram-Schmidt construit une famille de gazouillis définis sur l'intervalle $[T_S, T_G]$, deux à deux orthogonaux, dont la phase est basée sur la formule suivante :

$$\psi_N(t) = 2\pi f_S T_S + \int_{T_S}^{t} \left[ f_S + \Delta f \sin\left(2\pi N \frac{t' - T_S}{T_G - T_S}\right) W(t') \right] dt'$$

Où W désigne une fonction de pondération telle que :

$W(T_S) = W(T_G) = \in$ où $\in$ est sensiblement égal à 0.

Selon un premier exemple, la fonction de pondération W est égale à:

$$W(t) = e^{-\left(\frac{t-T_M}{\tau}\right)^2}$$

Avec :

$$T_M = \frac{T_S + T_G}{2}$$

Ainsi :

$$\psi_N(t) = 2\pi f_S T_S + \int_{T_S}^{t} \left[ f_S + \Delta f \sin\left(2\pi N \frac{t'-T_S}{T_G-T_S}\right) e^{-\left(\frac{t'-T_M}{\tau}\right)^2} \right] dt'$$

Selon un premier exemple, la fonction de pondération W est égale à:

$$W(t) = \frac{1}{2}\left(1 + \cos\left(2\pi \frac{t-T_M}{T_G-T_S}\right)\right)$$

pour laquelle :

$$W(T_S) = W(T_G) = 0$$

Ainsi :

$$\psi_N(t) = 2\pi f_S T_S + \int_{T_S}^{t} \left[ f_S + \Delta f \sin\left(2\pi N \frac{t'-T_S}{T_G-T_S}\right)\frac{1}{2}\left(1 + \cos\left(2\pi \frac{t-T_M}{T_G-T_S}\right)\right) \right] dt'$$

Les gazouillis obtenus $u_N(t) = A e^{i\psi_N(t)}$, ne sont cependant pas orthogonaux quelle que soit la fonction de pondération proposée.
Afin de les rendre orthogonaux deux à deux et obtenir une famille $\{v_k\}_{1 \leq k \leq K}$, si l'on désire une base orthonormée, une famille $\{w_k\}_{1 \leq k \leq K}$:

$$v_1 = u_1 \rightarrow w_1 = \frac{v_1}{\|v_1\|}$$

$$v_2 = u_2 - \text{projection}_{v_1}(u_2) \rightarrow w_2 = \frac{v_2}{\|v_2\|}$$

$$v_3 = u_3 - \text{projection}_{v_1}(u_3) - \text{projection}_{v_2}(u_3) \rightarrow w_3 = \frac{v_3}{\|v_3\|}$$

$$v_K = u_K - \sum_{k=1}^{K-1} \text{projection}_{v_k}(u_K) \rightarrow w_K = \frac{v_K}{\|v_K\|}$$

L'opération projection$_v$(*u*) désigne l'opérateur de projection orthogonale sur la droite vectorielle de vecteur directeur *v* :

$$\text{projection}_v(u) = \frac{\langle v, u \rangle}{\langle v, v \rangle} v$$

Où $\langle , \rangle$ désigne le produit scalaire.

Dans le cadre de l'invention, l'obtention de la famille $\{v_k\}_{1 \leq k \leq K}$ est suffisante.

Il est à remarquer ici que les gazouillis $v_k$ obtenus ne sont plus des signaux à enveloppe constante une fois l'algorithme de Gram-Schmidt appliqué sur la famille de gazouillis $\{u_k\}_{1 \leq k \leq K}$.

Le fait que les gazouillis générés en bande de base ne soient pas à enveloppe constante, sauf pour le premier d'entre eux $v_1$ nécessite simplement la mise à l'échelle subséquente des gazouillis constituant la deuxième partie du signal afin de produire un signal composé continu du point de vue de son module lors de la combinaison des premier et second signaux.

Dans l'exemple de la Fig. 2a, la plage de fréquence de la seconde et de la troisième partie est centrée sur la fréquence de l'exponentielle complexe de la partie 20a.

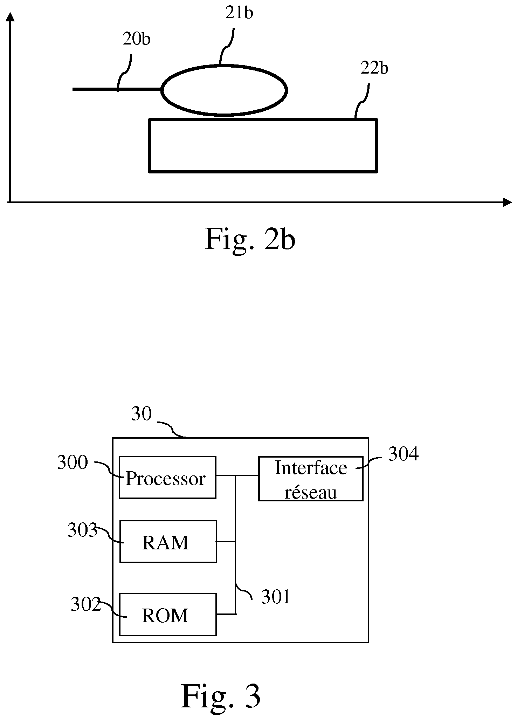

La Fig. 2b est un second exemple de paquet comportant au moins une information identifiant un émetteur selon la présente invention.

L'axe des abscisses représente le temps, par exemple compris entre 0 et 100 ms, et l'axe des ordonnées représente le plan fréquence par exemple pour une plage de fréquence de 10 MHz.

Selon la présente invention, le paquet comportant au moins une information identifiant un émetteur est composé de trois parties 20b, 21b et 22b.

Les parties 20b, 21b et 22b sont identiques aux parties 20a, 21a et 22a à la seule différence que seule la plage de fréquence de la seconde partie 21b est centrée sur la fréquence de l'exponentielle complexe de la partie 20b et la plage de fréquence dans laquelle la troisième partie est décalée de la fréquence de l'exponentielle complexe au moins de la moitié de la plage de fréquence dans laquelle est transmise la seconde partie, par exemple de 312,5 kHz.

La Fig. 3 représente un exemple d'architecture d'un émetteur selon la présente invention.

Un émetteur 30 d'une borne fixe ou d'un véhicule selon la présente invention comprend :

- un processeur, micro-processeur, ou microcontrôleur 300 ;
- une mémoire volatile 303 ;
- une mémoire non volatile 302;
- une interface réseau 304 permettant la transmission de paquets sur un lien radio ;
- un bus de communication 301 reliant le processeur 300 à la mémoire ROM 302, à la mémoire RAM 303 et à l'interface réseau 304.

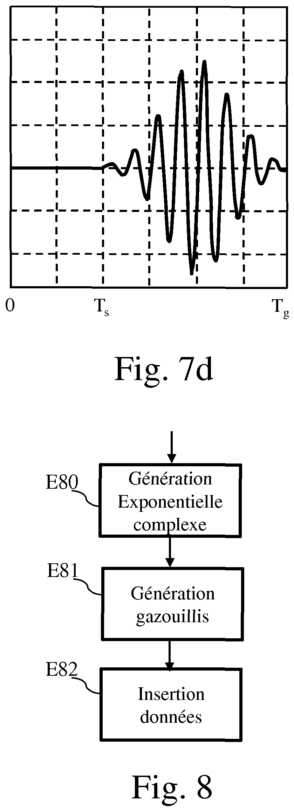

Le processeur 300 est capable d'exécuter des instructions chargées dans la mémoire volatile 303 à partir de la mémoire non volatile 302, d'une mémoire externe (non représentée), d'un support de stockage, tel qu'une carte SD ou autre, ou d'un réseau de communication. Lorsque l'émetteur 30 est mis sous tension, le processeur 300 est capable de lire de la mémoire volatile 303 des instructions et de les exécuter. Ces instructions forment un programme d'ordinateur qui cause la mise en œuvre, par le processeur 300, de tout ou partie du procédé décrit en relation avec la Fig. 8.

Tout ou partie du procédé décrit en relation avec la Fig. 8 peut être implémenté sous forme logicielle par exécution d'un ensemble d'instructions par une machine programmable, telle qu'un DSP *(Digital Signal Processor* en anglais ou *Unité de Traitement de Signal Numérique* en français) ou un microcontrôleur ou être implémenté sous forme matérielle par une machine ou un composant dédié, tel qu'un FPGA *(Field-Programmable Gate Array* en anglais ou *Matrice de Portes Programmable sur le Terrain* en français) ou un ASIC *(Application-Specific Integrated Circuit* en anglais ou *Circuit Intégré Spécifique à une Application* en français).

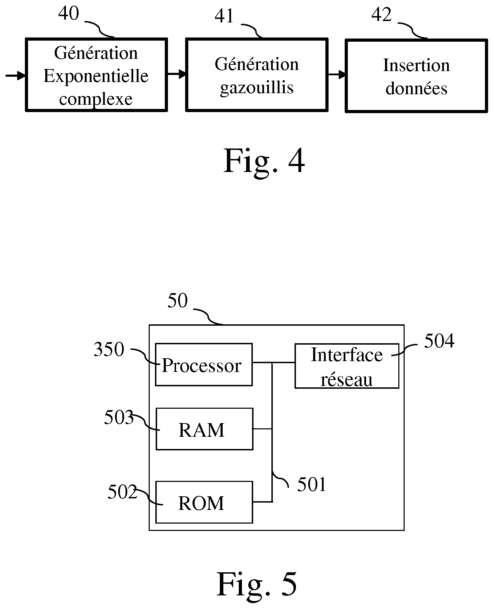

L'interface réseau est décrite plus en détail en référence à la Fig. 4.

La Fig. 4 représente un exemple d'architecture de l'interface réseau d'un émetteur selon la présente invention.

L'interface réseau 304 comporte un module de génération 40 d'une exponentielle complexe telle que décrite dans la première partie des paquets en référence aux Figs. 2a et 2.

L'interface réseau 304 comporte un module de génération 41 d'un gazouillis tel que décrit dans la seconde partie des paquets en référence aux Figs. 2a et 2b.

L'interface réseau 304 comporte un module d'insertion de données modulées tel que décrit dans la troisième partie des paquets en référence aux Figs. 2a et 2b.

La Fig. 5 représente un exemple d'architecture d'un récepteur selon la présente invention.

Un récepteur 50 d'une borne fixe ou d'un véhicule selon la présente invention comprend :

- un processeur, micro-processeur, ou microcontrôleur 500 ;
- une mémoire volatile 503 ;
- une mémoire non volatile 502;
- une interface réseau 504 permettant la transmission de paquets sur un lien radio
- un bus de communication 501 reliant le processeur 500 à la mémoire ROM 502, à la mémoire RAM 503 et à l'interface réseau 504.

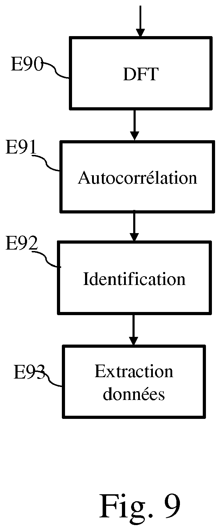

Le processeur 500 est capable d'exécuter des instructions chargées dans la mémoire volatile 503 à partir de la mémoire non volatile 502, d'une mémoire externe (non représentée), d'un support de stockage, tel qu'une carte SD ou autre, ou d'un réseau de communication. Lorsque le récepteur 50 est mis sous tension, le processeur 500 est capable de lire de la mémoire volatile 503 des instructions et de les exécuter. Ces instructions forment un programme d'ordinateur qui cause la mise en œuvre, par le processeur 500, de tout ou partie du procédé décrit en relation avec la Fig. 9.

Tout ou partie du procédé décrit en relation avec la Fig. 9 peut être implémenté sous forme logicielle par exécution d'un ensemble d'instructions par une machine programmable, telle qu'un DSP *(Digital Signal Processor* en anglais ou *Unité de Traitement de Signal Numérique* en français) ou un microcontrôleur ou être implémenté sous forme matérielle par une machine ou un composant dédié, tel qu'un FPGA *(Field-Programmable Gate Array* en anglais ou *Matrice de Portes Programmable sur le Terrain* en français) ou un ASIC *(Application-Specific Integrated Circuit* en anglais ou *Circuit Intégré Spécifique à une Application* en français).

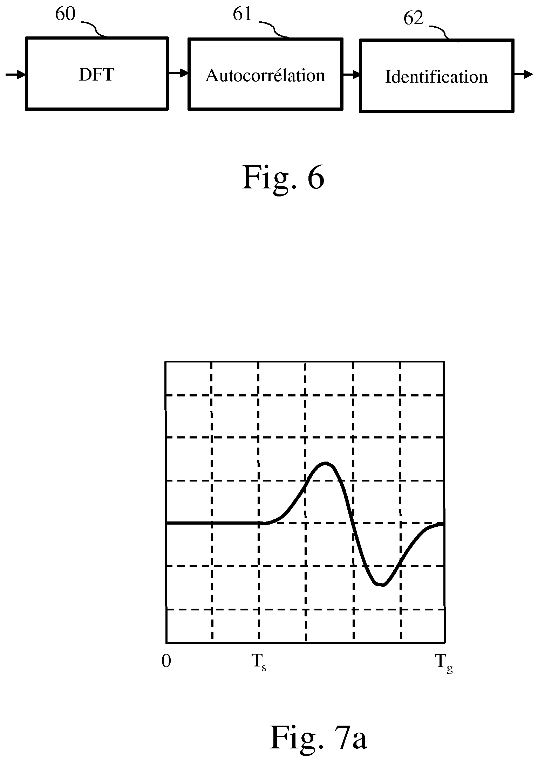

L'interface réseau est décrite plus en détail en référence à la Fig. 6.

La Fig. 6 représente un exemple d'architecture de l'interface réseau d'un récepteur selon la présente invention.

L'interface réseau 504 comporte un module de détection 60 d'un premier signal telle que la première partie des paquets décrite en référence aux Figs. 2a et 2. Le module de détection 50 d'un premier signal est par exemple et non limitativement implémenté sous la forme d'un module de transformée de Fourrier Rapide FFT (acronyme de Fast Fourrier Transform en anglais).

L'interface réseau 504 comporte un module de détection 61 de gazouillis tel que décrit dans la seconde partie des paquets décrits en référence aux Figs. 2a et 2b.

Le module de détection de gazouillis 61 est par exemple constitué d'une batterie de modules de corrélation. Chaque module de corrélation corrèle la seconde partie du paquet reçue à un gazouillis prédéterminé et assigné à un émetteur donné. Lorsque la seconde partie du paquet reçu est fortement corrélée au gazouillis prédéterminé, l'émetteur ayant émis le paquet de données est identifié par le module d'identification 62.

L'interface réseau 304 comporte un module d'extraction de données non représenté dans la Fig. 6.

La Fig. 7a représente un premier mode de réalisation de la partie du paquet comportant une information identifiant un émetteur selon la présente invention.

L'axe des abscisses représente le temps et l'axe des ordonnées représente la fréquence.

Dans l'exemple de la Fig. 7a, $T_G$ est égale à $3^*T_S$, $N$ est égale à 1, $f_s$ est normalisée à 1, $\tau$ est égale à 0,5 et $\Delta f$ est égale 0,5 $f_s$.

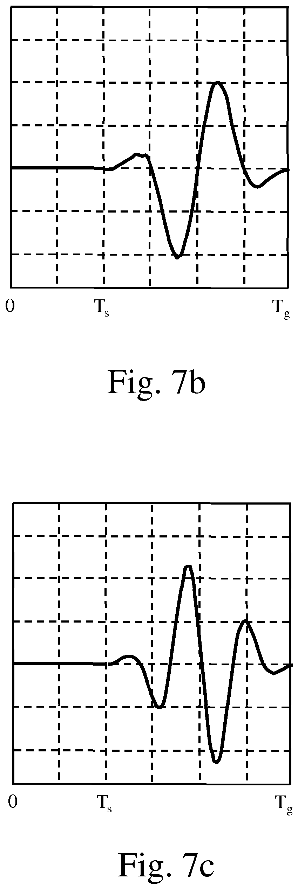

La Fig. 7b représente un second mode de réalisation de la partie du paquet comportant une information identifiant un émetteur selon la présente invention.

L'axe des abscisses représente le temps et l'axe des ordonnées représente la fréquence.

Dans l'exemple de la Fig. 7b, $T_G$ est égale à $3^*T_S$, $N$ est égale à 2, $f_s$ est normalisée à 1, $\tau$ est égale à 0,5 et $\Delta f$ est égale 0,5 $f_s$.

La Fig. 7c représente un troisième mode de réalisation de la partie du paquet comportant une information identifiant un émetteur selon la présente invention.

L'axe des abscisses représente le temps et l'axe des ordonnées représente la fréquence.

Dans l'exemple de la Fig. 7c, $T_G$ est égale à $3^*T_S$, $N$ est égale à $3, f_s$ est normalisée à 1, $\tau$ est égale à 0,5 et $\Delta f$ est égale 0,5 $f_s$.

La Fig. 7d représente un quatrième mode de réalisation de la partie du paquet comportant une information identifiant un émetteur selon la présente invention.

L'axe des abscisses représente le temps et l'axe des ordonnées représente la fréquence.

Dans l'exemple de la Fig. 7d, $T_G$ est égale à $3^*T_S$, $N$ est égale à 8, $f_s$ est normalisée à 1, $\tau$ est égale à 0,5 et $\Delta f$ est égale 0,5 $f_s$.

La Fig. 8 représente un exemple d'algorithme exécuté par un émetteur selon la présente invention.

Le présent algorithme est décrit dans un exemple dans lequel il est exécuté par le processeur 300 d'un émetteur lorsque l'émetteur doit envoyer un paquet selon la présente invention.

A l'étape E80, le processeur 300 obtient la fréquence du premier signal en bande de base et commande la génération du premier signal telle que décrite dans la première partie des paquets en référence aux Figs. 2a et 2b.

A l'étape E81, le processeur 300 obtient le gazouillis assigné à l'émetteur et commande la génération de celui-ci comme cela a été décrit en référence aux Figs. 2a et 2b.

Le gazouillis assigné à l'émetteur est par exemple mémorisé dans la mémoire de l'émetteur 30

A l'étape E82, le processeur 300 commande l'insertion des données comme cela a été décrit en référence aux Figs. 2a et 2b.

Le paquet est ainsi transféré sur le médium radio.

La Fig. 9 représente un exemple d'algorithme exécuté par un récepteur selon la présente invention.

Le présent algorithme est décrit dans un exemple dans lequel il est exécuté par le processeur 500 d'un récepteur lorsque le récepteur reçoit un paquet selon la présente invention.

A l'étape E90, le processeur 500 obtient les données de sortie d'un module de transformée de Fourrier Rapide FFT, la ou les raies de fréquence identifiées pendant la durée $T_s$. Lorsque plusieurs raies de fréquences sont identifiées, il est possible qu'une collision partielle ait eu lieu lors de la réception.

A l'étape E91, le processor 500 commande l'exécution d'une pluralité de corrélations.

Chaque corrélation corrèle pendant une durée prédéterminée, la seconde partie du paquet reçu à un gazouillis prédéterminé et assigné à un émetteur donné. Lorsque la seconde partie du paquet reçu est fortement corrélée au gazouillis prédéterminé, l'émetteur ayant émis le paquet de données ou les émetteurs ayant émis les paquets de données sont identifiés par le processeur 500 à l'étape E92.

Chaque gazouillis associé à un émetteur est par exemple mémorisé dans la mémoire de du récepteur 50

A l'étape E91, le processor 500 commande l'extraction des données.

## Revendications

1. Procédé de transmission d'un paquet comportant au moins une information identifiant un émetteur dans un réseau Ad-Hoc, le paquet étant destiné à au moins un récepteur, **caractérisé en ce que** le procédé comporte les étapes, exécutées par l'émetteur à chaque transmission d'un paquet, de :

    - insertion (E80) dans le paquet d'un premier signal pendant une première durée prédéterminée, le premier signal étant, en bande de base, de la forme :

    $$S(t) = Ae^{i2\pi f_S t + i\varphi}$$

    Où $t \in [0, T_S]$ qui est l'intervalle de temps sur lequel est défini le premier signal,
    $A$ est l'amplitude,
    $f_S$ est la fréquence du premier signal en bande de base et
    $\varphi \in [0, 2\pi[$ est une phase choisie arbitrairement, le premier signal permettant une synchronisation fréquentielle par le récepteur,

    - insertion (E81) dans le paquet d'un second signal ayant les caractéristiques d'un signal modulé en fréquence dont la fréquence centrale est égale à la fréquence du premier signal, le second signal étant obtenu à partir d'une phase définie à partir d'un signal pseudopériodique, le second signal ayant préalablement été alloué à l'émetteur et ayant une seconde durée prédéterminée, le second signal étant différent et orthogonal à chaque autre second signal alloués à d'autres émetteurs et permettant une synchronisation temporelle par le récepteur,
    - insertion (E82) dans le paquet de données en association avec les premier et second signaux,
    - transfert du paquet après une transposition dans un plan fréquence sur un médium radio.

2. Procédé selon la revendication 1, **caractérisé en ce que** la plage de fréquence dans laquelle les données sont insérées en association avec le premier et le second signal est centrée sur la fréquence du premier signal.

3. Procédé selon la revendication 1, **caractérisé en ce que** la plage de fréquence dans laquelle les données sont transmises est décalée du second signal au moins de la moitié de la plage de fréquence dans laquelle le second signal est transféré.

**4.** Procédé selon la revendication 3, **caractérisé en ce que** la plage de fréquence dans laquelle les données sont transmises est décalée du second signal de la moitié de la plage de fréquence dans laquelle le second signal est transféré.

**5.** Procédé d'identification d'au moins un émetteur ayant émis un paquet sur un médium radio, le paquet comportant au moins une information identifiant le ou chaque émetteur dans un réseau Ad-Hoc, le paquet étant destiné à au moins un récepteur, **caractérisé en ce que** le procédé comporte les étapes, exécutées par le récepteur de :

   - détection d'au moins un premier signal complexe pendant une première durée prédéterminée, le premier signal étant, en bande de base, de la forme :

$$S(t) = Ae^{i2\pi f_S t + i\varphi}$$

   Où :t E [0, $T_S$] qui est l'intervalle de temps sur lequel est défini le premier signal,
   $A$ est l'amplitude,
   $f_S$ est la fréquence du premier signal en bande de base et
   $\varphi \in [0, 2\pi[$ est une phase choisie arbitrairement, le premier signal permettant une synchronisation fréquentielle par le récepteur,

   - détection à la suite du premier signal d'au moins un second signal modulé en fréquence autour d'une fréquence égale à la fréquence de l'exponentielle complexe, le second signal ayant les caractéristiques d'un signal modulé en fréquence dont la fréquence centrale est égale à la fréquence du premier signal, le second signal étant obtenu à partir d'une phase définie à partir d'un signal pseudopériodique, le second signal ayant préalablement été alloué à l'émetteur et ayant une seconde durée prédéterminée, le second signal étant différent et orthogonal à chaque autre second signal alloués à d'autres émetteurs et permettant une synchronisation temporelle par le récepteur,
   - identification à partir du ou de chaque second signal détecté de l'émetteur ayant émis le paquet comportant au moins une information identifiant l'émetteur,
   - extraction des données associées à chaque premier et second signal.

**6.** Procédé selon la revendication 5, **caractérisé en ce que** la plage de fréquence dans laquelle les données sont insérées en association avec les premier et second signaux est centrée sur la fréquence du premier signal.

**7.** Procédé selon la revendication 5, **caractérisé en ce que** la plage de fréquence dans laquelle les données sont transmises est décalée du second signal au moins de la moitié de la plage de fréquence dans laquelle le second signal est transféré.

**8.** Procédé selon la revendication 7, **caractérisé en ce que** la plage de fréquence dans laquelle les données sont transmises est décalée du second signal de la moitié de la plage de fréquence dans laquelle le second signal est transféré.

**9.** Dispositif de transmission d'un paquet comportant au moins une information identifiant un émetteur dans un réseau Ad-Hoc, le paquet étant destiné à au moins un récepteur, **caractérisé en ce que** le dispositif est inclus dans l'émetteur et comporte :

   - des moyens d'insertion dans le paquet d'un premier signal pendant une première durée prédéterminée, le premier signal étant, en bande de base, de la forme :

$$S(t) = Ae^{i2\pi f_S t + i\varphi}$$

   Où:

   $t$ E [0, $T_S$] qui est l'intervalle de temps sur lequel est défini le premier signal,
   $A$ est l'amplitude,
   $f_S$ est la fréquence du premier signal en bande de base et
   $\varphi \in [0, 2\pi[$ est une phase choisie arbitrairement, le premier signal permettant une synchronisation fréquentielle par le récepteur,

- des moyens d'insertion dans le paquet d'un second signal ayant les caractéristiques d'un signal modulé en fréquence dont la fréquence centrale est égale à la fréquence du premier signal, le second signal étant obtenu à partir d'une phase définie à partir d'un signal pseudopériodique, le second signal ayant préalablement été alloué à l'émetteur et ayant une seconde durée prédéterminée, le second signal étant différent et orthogonal à chaque autre second signal alloués à d'autres émetteurs etpermettant une synchronisation temporelle par le récepteur
- des moyens d'insertion dans le paquet de données en association avec les premier et second signaux,
- des moyens de transfert du paquet après une transposition dans un plan fréquence sur un médium radio.

10. Dispositif d'identification d'au moins un émetteur ayant émis un paquet sur un médium radio, le paquet comportant au moins une information identifiant le ou chaque émetteur dans un réseau Ad-Hoc, le paquet étant destiné à au moins un récepteur, **caractérisé en ce que** le dispositif est inclus dans le récepteur et comporte :

- des moyens de détection d'au moins un premier signal complexe pendant une première durée prédéterminée, le premier signal étant, en bande de base, de la forme :

$$S(t) = Ae^{i2\pi f_S t + i\varphi}$$

Où:

$t \in [0, T_S]$ qui est l'intervalle de temps sur lequel est défini le premier signal,
$A$ est l'amplitude,
$f_S$ est la fréquence du premier signal en bande de base et
$\varphi \in [0, 2\pi[$ est une phase choisie arbitrairement, le premier signal permettant une synchronisation fréquentielle par le récepteur,

- des moyens de détection à la suite du premier signal d'au moins un second signal ayant les caractéristiques d'un signal modulé en fréquence dont la fréquence centrale est égale à la fréquence du premier signal, le second signal étant obtenu à partir d'une phase définie à partir d'un signal pseudopériodique, le second signal ayant préalablement été alloué à l'émetteur et ayant une seconde durée prédéterminée, le second signal étant différent et orthogonal à chaque autre second signal alloués à d'autres émetteurs et permettant une synchronisation temporelle par le récepteur
- des moyens d'identification à partir du ou de chaque second signal détecté de l'émetteur ayant émis le paquet comportant au moins une information identifiant l'émetteur,
- des moyens d'extraction des données associées à chaque premier et second signal.

**Patentansprüche**

1. Verfahren zur Übertragung eines Pakets, das mindestens eine einen Sender in einem Ad-hoc-Netz identifizierende Information aufweist, wobei das Paket für mindestens einen Empfänger bestimmt ist, **dadurch gekennzeichnet, dass** das Verfahren die folgenden vom Sender bei jeder Übertragung eines Pakets ausgeführten Schritte aufweist:

- Einfügung (E80) eines ersten Signals in das Paket während einer ersten vorbestimmten Dauer, wobei das erste Signal im Basisband die Form hat:

$$S(t) = Ae^{i2\pi f_S t + i\varphi}$$

wobei

$t \in [0, T_S]$ das Zeitintervall ist, in dem das erste Signal definiert ist,
A die Amplitude ist,
$f_S$ die Frequenz des ersten Signals im Basisband ist und
$\varphi \in [0, 2\pi r[$ eine willkürlich gewählte Phase ist, wobei das erste Signal eine Frequenzsynchronisation durch den Empfänger erlaubt,

- Einfügung (E81) eines zweiten Signals in das Paket, das die Merkmale eines frequenzmodulierten Signals hat, dessen Mittenfrequenz gleich der Frequenz des ersten Signals ist, wobei das zweite Signal ausgehend von einer ausgehend von einem pseudoperiodischen Signal definierten Phase erhalten wird, wobei das zweite Signal vorher dem Sender zugewiesen wurde und eine zweite vorbestimmte Dauer hat, wobei das zweite Signal anders als jedes und orthogonal zu jedem anderen zweiten Signal ist, die anderen Sendern zugewiesen sind, und eine Zeitsynchronisation durch den Empfänger erlaubt,
- Einfügung (E82) von Daten zusammen mit den ersten und zweiten Signalen in das Paket,
- Übertragung des Pakets nach einer Transposition in einen Frequenzplan auf einem Funkmedium.

2. Verfahren nach Anspruch 1, **dadurch gekennzeichnet, dass** der Frequenzbereich, in den die Daten zusammen mit dem ersten und dem zweiten Signal eingefügt werden, auf die Frequenz des ersten Signals zentriert ist.

3. Verfahren nach Anspruch 1, **dadurch gekennzeichnet, dass** der Frequenzbereich, in dem die Daten übertragen werden, zum zweiten Signal um mindestens die Hälfte des Frequenzbereichs verschoben ist, in dem das zweite Signal übertragen wird.

4. Verfahren nach Anspruch 3, **dadurch gekennzeichnet, dass** der Frequenzbereich, in dem die Daten übertragen werden, zum zweiten Signal um die Hälfte des Frequenzbereichs verschoben ist, in dem das zweite Signal übertragen wird.

5. Verfahren zur Identifizierung mindestens eines Senders, der ein Paket auf einem Funkmedium gesendet hat, wobei das Paket mindestens eine Information aufweist, die den oder jeden Sender in einem Ad-hoc-Netz identifiziert, wobei das Paket für mindestens einen Empfänger bestimmt ist, **dadurch gekennzeichnet, dass** das Verfahren die folgenden vom Empfänger ausgeführten Schritte aufweist:

- Erfassung mindestens eines ersten komplexen Signals während einer vorbestimmten ersten Dauer, wobei das erste Signal im Basisband die Form hat:

$$S(t) = Ae^{i2\pi f_S t + i\varphi}$$

wobei:

$t \in [0, T_S]$ das Zeitintervall ist, in dem das erste Signal definiert ist,
A die Amplitude ist,
$f_S$ die Frequenz des ersten Signals im Basisband ist und
$\varphi \in [0, 2\pi[$ eine willkürlich gewählte Phase ist, wobei das erste Signal eine Frequenzsynchronisation durch den Empfänger erlaubt,

- Erfassung nach dem ersten Signal mindestens eines zweiten um eine Frequenz gleich der Frequenz der komplexen Exponentialfunktion herum frequenzmodulierten Signals, wobei das zweite Signal die Merkmale eines frequenzmodulierten Signals hat, dessen Mittenfrequenz gleich der Frequenz des ersten Signals ist, wobei das zweite Signal ausgehend von einer ausgehend von einem pseudoperiodischen Signal definierten Phase erhalten wird, wobei das zweite Signal vorher dem Sender zugewiesen worden ist und eine zweite vorbestimmte Dauer hat, wobei das zweite Signal anders als jedes und orthogonal zu jedem anderen zweiten Signal ist, die anderen Sendern zugewiesen sind, und eine Zeitsynchronisation durch den Empfänger erlaubt,
- Identifizierung, ausgehend von dem oder jedem zweiten erfassten Signal, des Senders, der das Paket gesendet hat, das mindestens eine den Sender identifizierende Information aufweist,
- Entnahme der jedem ersten und zweiten Signal zugeordneten Daten.

6. Verfahren nach Anspruch 5, **dadurch gekennzeichnet, dass** der Frequenzbereich, in den die Daten zusammen mit den ersten und zweiten Signalen eingefügt werden, auf die Frequenz des ersten Signals zentriert ist.

7. Verfahren nach Anspruch 5, **dadurch gekennzeichnet, dass** der Frequenzbereich, in dem die Daten übertragen werden, zum zweiten Signal mindestens um die Hälfte des Frequenzbereichs verschoben ist, in dem das zweite Signal übertragen wird.

8. Verfahren nach Anspruch 7, **dadurch gekennzeichnet, dass** der Frequenzbereich, in dem die Daten übertragen werden, zum zweiten Signal um die Hälfte des Frequenzbereichs verschoben ist, in dem das zweite Signal übertragen wird.

9. Vorrichtung zur Übertragung eines Pakets, das mindestens eine Information aufweist, die einen Sender in einem Ad-hoc-Netz identifiziert, wobei das Paket für mindestens einen Empfänger bestimmt ist, **dadurch gekennzeichnet, dass** die Vorrichtung im Sender enthalten ist und aufweist:

   - Einrichtungen zur Einfügung eines ersten Signals in das Paket während einer vorbestimmten ersten Dauer, wobei das erste Signal im Basisband die Form hat:

$$S(t) = Ae^{i2\pi f_S t + i\varphi}$$

   wobei:

   $t \in [0, T_S]$ das Zeitintervall ist, in dem das erste Signal definiert ist,
   A die Amplitude ist,
   $f_S$ die Frequenz des ersten Signals im Basisband ist und
   $\varphi \in [0, 2\pi r[$ eine willkürlich gewählte Phase ist, wobei das erste Signal eine Frequenzsynchronisation durch den Empfänger erlaubt,

   - Einrichtungen zur Einfügung eines zweiten Signals in das Paket, das die Merkmale eines frequenzmodulierten Signals hat, dessen Mittenfrequenz gleich der Frequenz des ersten Signals ist, wobei das zweite Signal ausgehend von einer ausgehend von einem pseudoperiodischen Signal definierten Phase erhalten wird, wobei das zweite Signal vorher dem Sender zugewiesen wurde und eine zweite vorbestimmte Dauer hat, wobei das zweite Signal anders als jedes und orthogonal zu jedem anderen zweiten Signal ist, die anderen Sendern zugewiesen sind, und eine Zeitsynchronisation durch den Empfänger erlaubt,
   - Einrichtungen zur Einfügung von Daten zusammen mit den ersten und zweiten Signalen in das Paket,
   - Übertragungseinrichtungen des Pakets nach einer Transposition in einen Frequenzplan auf einem Funkmedium.

10. Vorrichtung zur Identifizierung mindestens eines Senders, der ein Paket auf einem Funkmedium gesendet hat, wobei das Paket mindestens eine Information aufweist, die den oder jeden Sender in einem Ad-hoc-Netz identifiziert, wobei das Paket für mindestens einen Empfänger bestimmt ist, **dadurch gekennzeichnet, dass** die Vorrichtung im Empfänger enthalten ist und aufweist:

   - Einrichtungen zur Erfassung mindestens eines ersten komplexen Signals während einer vorbestimmten ersten Dauer, wobei das erste Signal im Basisband die Form hat:

$$S(t) = Ae^{i2\pi f_S t + i\varphi}$$

   wobei:

   $t \in [0, T_S]$ das Zeitintervall ist, in dem das erste Signal definiert ist,
   A die Amplitude ist,
   $f_S$ die Frequenz des ersten Signals im Basisband ist und
   $\varphi \in [0, 2\pi r[$ eine willkürlich gewählte Phase ist, wobei das erste Signal eine Frequenzsynchronisation durch den Empfänger erlaubt,

   - Einrichtungen zur Erfassung nach dem ersten Signal mindestens eines zweiten Signals, das die Merkmale eines frequenzmodulierten Signals hat, dessen Mittenfrequenz gleich der Frequenz des ersten Signals ist, wobei das zweite Signal ausgehend von einer ausgehend von einem pseudoperiodischen Signal definierten Phase erhalten wird, wobei das zweite Signal vorher dem Sender zugewiesen wurde und eine zweite vorbestimmte Dauer hat, wobei das zweite Signal anders als jedes und orthogonal zu jedem anderen zweiten Signal ist, die anderen Sendern zugewiesen sind, und eine Zeitsynchronisation durch den Empfänger erlaubt,
   - Einrichtungen zur Identifizierung, ausgehend von dem oder jedem zweiten erfassten Signal, des Senders, der das Paket gesendet hat, das mindestens eine den Sender identifizierende Information aufweist,
- Einrichtungen zur Entnahme der jedem ersten und zweiten Signal zugeordneten Daten.

**Claims**

1. Method for transmitting a packet comprising at least one piece of information identifying a transmitter in an ad hoc network, the packet being intended for at least one receiver, **characterized in that** the method comprises the steps, carried out by the transmitter every time a packet is transmitted, of:

   - inserting (E80), into the packet, a first signal for a predetermined first duration, the first signal being, in the baseband state, of the form:

$$S(t) = Ae^{i2\pi f_S t + i\varphi}$$

   where $t \in [0, T_S]$ is the time interval over which the first signal is defined,
   $A$ is amplitude,
   $f_S$ is the frequency of the first signal in the baseband state and
   $\varphi \in [0, 2\pi]$ is an arbitrarily chosen phase, the first signal enabling frequency synchronization by the receiver,

   - inserting (E81), into the packet, a second signal having the characteristics of a frequency-modulated signal the centre frequency of which is equal to the frequency of the first signal, the second signal being obtained on the basis of a phase defined on the basis of a pseudoperiodic signal, the second signal having been allocated to the transmitter beforehand and having a predetermined second duration, the second signal being different from and orthogonal to every other second signal allocated to other transmitters and enabling time synchronization by the receiver,
   - inserting (E82), into the packet, data in association with the first and second signals,
   - transferring the packet after transposition into a frequency plane over a radio medium.

2. Method according to Claim 1, **characterized in that** the frequency range in which the data are inserted in association with the first and the second signal is centred on the frequency of the first signal.

3. Method according to Claim 1, **characterized in that** the frequency range in which the data are transmitted is offset from the second signal by at least half the frequency range in which the second signal is transferred.

4. Method according to Claim 3, **characterized in that** the frequency range in which the data are transmitted is offset from the second signal by half the frequency range in which the second signal is transferred.

5. Method for identifying at least one transmitter which has transmitted a packet over a radio medium, the packet comprising at least one piece of information identifying the or every transmitter in an ad hoc network, the packet being intended for at least one receiver, **characterized in that** the method comprises the steps, carried out by the receiver, of:

   - detecting at least one complex first signal for a predetermined first duration, the first signal being, in the baseband state, of the form:

$$S(t) = Ae^{i2\pi f_S t + i\varphi}$$

   where: $t \in [0, T_S]$ is the time interval over which the first signal is defined,
   $A$ is amplitude,
   $f_S$ is the frequency of the first signal in the baseband state and
   $\varphi \in [0, 2\pi]$ is an arbitrarily chosen phase, the first signal enabling frequency synchronization by the receiver,

   - detecting, following the first signal, at least one second frequency-modulated signal modulated about a frequency equal to the frequency of the complex exponential, the second signal having the characteristics of a frequency-modulated signal the centre frequency of which is equal to the frequency of the first signal, the second signal being obtained on the basis of a phase defined on the basis of a pseudoperiodic signal, the second signal having been allocated to the transmitter beforehand and having a predetermined second duration, the second signal being different from and orthogonal to every other second signal allocated to other transmitters and enabling time synchronization by the receiver,
- identifying, on the basis of the or every second signal detected, the transmitter which transmitted the packet comprising at least one piece of information identifying the transmitter,
- extracting the data associated with every first and second signal.

6.  Method according to Claim 5, **characterized in that** the frequency range in which the data are inserted in association with the first and second signals is centred on the frequency of the first signal.

7.  Method according to Claim 5, **characterized in that** the frequency range in which the data are transmitted is offset from the second signal by at least half the frequency range in which the second signal is transferred.

8.  Method according to Claim 7, **characterized in that** the frequency range in which the data are transmitted is offset from the second signal by half the frequency range in which the second signal is transferred.

9.  Device for transmitting a packet comprising at least one piece of information identifying a transmitter in an ad hoc network, the packet being intended for at least one receiver, **characterized in that** the device is included in the transmitter and comprises:

- means for inserting, into the packet, a first signal for a predetermined first duration, the first signal being, in the baseband state, of the form:

$$S(t) = Ae^{i2\pi f_S t + i\varphi}$$

where:

$t \in [0, T_S]$ is the time interval over which the first signal is defined,
$A$ is amplitude,
$f_S$ is the frequency of the first signal in the baseband state and
$\varphi \in [0, 2\pi]$ is an arbitrarily chosen phase, the first signal enabling frequency synchronization by the receiver,

- means for inserting, into the packet, a second signal having the characteristics of a frequency-modulated signal the centre frequency of which is equal to the frequency of the first signal, the second signal being obtained on the basis of a phase defined on the basis of a pseudoperiodic signal, the second signal having been allocated to the transmitter beforehand and having a predetermined second duration, the second signal being different from and orthogonal to every other second signal allocated to other transmitters and enabling time synchronization by the receiver,
- means for inserting, into the packet, data in association with the first and second signals,
- means for transferring the packet after transposition into a frequency plane over a radio medium.

10. Device for identifying at least one transmitter which has transmitted a packet over a radio medium, the packet comprising at least one piece of information identifying the or every transmitter in an ad hoc network, the packet being intended for at least one receiver, **characterized in that** the device is included in the receiver and comprises:

- means for detecting at least one complex first signal for a predetermined first duration, the first signal being, in the baseband state, of the form:

$$S(t) = Ae^{i2\pi f_S t + i\varphi}$$

where:

$t \in [0, T_S]$ is the time interval over which the first signal is defined,
$A$ is amplitude,
$f_S$ is the frequency of the first signal in the baseband state and

$\varphi \in$ **[0,2$\pi$]** is an arbitrarily chosen phase, the first signal enabling frequency synchronization by the receiver,

- means for detecting, following the first signal, at least one second signal having the characteristics of a frequency-modulated signal the centre frequency of which is equal to the frequency of the first signal, the second signal being obtained on the basis of a phase defined on the basis of a pseudoperiodic signal, the second signal having been allocated to the transmitter beforehand and having a predetermined second duration, the second signal being different from and orthogonal to every other second signal allocated to other transmitters and enabling time synchronization by the receiver,
- means for identifying, on the basis of the or every second signal detected, the transmitter which transmitted the packet comprising at least one piece of information identifying the transmitter,
- means for extracting the data associated with every first and second signal.

Vo

10b 10c 10d 10e 10f 10g

10a

Fig. 1

21a

20a 22a

Fig. 2a

20b    21b    22b

Fig. 2b

30

300    Processor    Interface    304
              réseau

303    RAM

302    ROM    301

Fig. 3

| 40 | 41 | 42 |
|---|---|---|
| Génération Exponentielle complexe | Génération gazouillis | Insertion données |

# Fig. 4

50

| | |
|---|---|
| 350 Processor | Interface réseau 504 |
| 503 RAM | |
| 502 ROM | 501 |

# Fig. 5

60

61

62

| DFT | Autocorrélation | Identification |

Fig. 6

0     $T_s$        $T_g$

Fig. 7a

Fig. 7b

Fig. 7c

Fig. 7d

Fig. 8

E90 DFT

E91 Autocorrélation

E92 Identification

E93 Extraction données

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010028307 A
- US 2010250783 A